# EUROPÄISCHE PATENTANMELDUNG

(11) **EP 4 290 436 A1**
(43) Veröffentlichungstag der Anmeldung: **13.12.2023**
(21) Anmeldenummer: 22178292.3
(22) Anmeldetag: 10.06.2022
(51) Int. Cl.: G06Q 10/06, G06Q 50/10, G06V 10/70

(54) **VERFAHREN UND SYSTEM ZUR IDENTIFIKATION VON ÜBERPORTIONIERUNG VON LEBENSMITTELN**

(71) Anmelder: LSG Lufthansa Service Holding AG, 63263 Neu-Isenburg (DE)
(72) Erfinder: Dinh, Khanh, 60598 Frankfurt (DE); Roccor, Björn, 63128 Dietzenbach (DE)
(74) Vertreter: Glawe, Delfs, Moll

(57) **Zusammenfassung**

Die Erfindung betrifft ein Verfahren zur Identifikation von Überportionierung von Komponenten (21.1-21.5) bei wenigstens teilweise konsumierten, gleichmäßig vorportionierten Essensangeboten (20) mit hinsichtlich der Komponenten (21.1-21.5) und deren Menge bekannter Zusammensetzung, mit den Schritte:
a) Erfassung eines Bildes (30) der Reste eines wenigstens teilweise konsumierten vorportionierten Essensangebots (20) mithilfe einer Bilderfassungseinheit (10);
b) Automatisiertes Segmentieren des erfassten Bildes (30) nach einzelnen Bestandteilen (31);
c) Automatisiertes Zuordnen der Bestandteile (31) des Bildes (30) zu den einzelnen Komponenten (21.1-21.5) gemäß der Zusammensetzung des vorportionierten Essensangebots (20) zur Identifikation von Resten der einzelnen Komponenten (21.1-21.5); und
d) Ermitteln der Konsumrate der einzelnen Komponenten (21.1-21.5) des vorportionierten Essensangebots (20) durch Abgleich der Menge der einzelnen Komponenten (21.1-21.5) gemäß bekannter Zusammensetzung mit den den einzelnen Komponenten (21.1-21.5) zugeordneten Resten.

Die Erfindung betrifft weiterhin ein zur Durchführung des Verfahrens ausgebildetes System.

## Beschreibung

Die Erfindung betrifft ein Verfahren und ein System zur Identifikation von Überportionierung von Lebensmitteln und letztendlich zur Abfallverminderung bei gleichmäßig vorportionierten Essensangeboten.

Vorportionierte Essensangebote sind aus verschiedenen Lebensbereichen bekannt.

So kann bspw. in Kantinen oder an Bord von Verkehrsmitteln Essen in Form von Tabletts, welche bereits mit einer oder mehreren verschiedenen Speisen in vorportionierten Mengen belegt sind, angeboten bzw. serviert werden. Regelmäßig werden bspw. an Bord von Flugzeugen tageszeitabhängige Mahlzeiten auf Tabletts serviert, auf denen neben einer Hauptspeise auch eine Vorspeise sowie ein Dessert angeordnet sind. Dabei ist es möglich, dass einem Passagier die Auswahl zwischen mehreren Hauptspeisen angeboten wird. Ebenso ist es - insbesondere in höheren Buchungsklassen - möglich, dass nur ein Teil der Speisen (bspw. die Vorspeise und/oder das Dessert) auf einem Tablett und ein anderer Teil der Speisen (bspw. die Hauptspeise) separat davon angeboten wird.

Unabhängig davon, wie das Essensangebot, bspw. an Bord von Verkehrsflugzeugen, hinsichtlich von Wahlmöglichkeiten und Darreichungsform konkret ausgestaltet ist, ist es wesentlich, dass die einzelnen Essensangebote hinsichtlich der Menge der einzelnen enthaltenen Speisen möglichst identisch sind, um Konflikte bspw. zwischen Passagieren zu vermeiden. In anderen Worten: Sollen hinsichtlich der angebotenen Speisen grundsätzlich identische Essensangebote möglichst gleichmäßig portioniert sein.

Um dies sicherzustellen, liegen den Essensangeboten, bspw. für Verkehrsflugzeuge, regelmäßig eindeutig definierte Zusammensetzungen zugrunde, in denen nicht nur die einzelnen Komponenten des Essensangebotes, sondern auch deren jeweilige Menge sowie ggf. deren Anordnung auf Geschirr bzw. einem Tablett vorgegeben ist. Diese Zusammensetzungen werden bei der Zubereitung und Zusammenstellung der einzelnen Essensangebote berücksichtigt, sodass nur gleichmäßig vorportionierte Essensangebote an Bord eines Flugzeugs gelangen, wo sie dann zu gegebener Zeit den Passagieren serviert werden.

Die Zusammensetzung eines Essensangebotes wird grundsätzlich auf Basis von Erfahrungswerten und unter Berücksichtigung evtl. Vorgaben, wie bspw. Eignung für eine bestimmte Ernährungsweise, Nährwerten oder Gesamtgewicht, festgelegt. Dabei besteht grundsätzlich das Risiko, dass zumindest ein Teil der Komponenten eines Essensangebots zu reichhaltig portioniert werden, sodass nach erfolgter Ausgabe eines Essensangebotes dieses regelmäßig nicht vollständig konsumiert wird und Reste zumindest einzelner Komponenten des Essensangebots zurückbleiben. Diese müssen dann entsorgt werden.

Durch Überportionierung einzelner Komponenten von Essensangeboten entstehen also praktisch systematisch zum einen grundsätzlich unerwünschte Lebensmittelabfälle, zum anderen Aufwand und Kosten für die Zubereitung von Lebensmitteln, die absehbar nicht konsumiert werden.

Grundsätzlich besteht daher die Zielsetzung, mögliche Überportionierung einzelner Komponenten von Essensangeboten mit bekannter Zusammensetzung zu erkennen, um die Zusammensetzung eines Essensangebotes ggf. so verändern zu können, dass jegliche Überportionierung möglichst zuverlässig vermieden oder zumindest reduziert wird.

Im Stand der Technik ist es dazu bekannt, stichprobenartig die Rückläufer von ausgegebenen Essensangeboten manuell zu sichten. Dabei werden Statistiken gepflegt, die aufgrund der aufwendigen Vorgehensweise des manuellen Sichtens jedoch regelmäßig nur sehr begrenzten Aussagegehalt haben (können), wie bspw. die Anzahl der nicht vollständig konsumierten Essensangebote. Da solche Untersuchungen aus Aufwandsgründen auch nur stichprobenartig durchgeführt werden können, sind die erlangten Erkenntnisse in der Regel kaum belastbar.

Es ist weiterhin bekannt, das Gewicht der Reste von nur teilweise konsumierten Essensangeboten zu ermitteln. Aus Aufwandsgründen wird dieses Gewicht aber lediglich global über sämtliche Reste mehrere Essensangebote mit identischer Ausgangszusammensetzung ermittelt. Zwar lässt sich so feststellen, ob möglicherweise grundsätzlich das Problem einer Überportionierung bei den fraglichen Essensangeboten besteht (nämlich, wenn das ermittelte Gewicht der Reste einen vorgegebenen Schwellwert, welcher ein übliches Maß an Resten von Essensangeboten widerspiegelt, übersteigt); eine Aussage, ob lediglich aber bspw. nur einzelne Komponenten überportioniert sind, lässt sich jedoch regelmäßig nicht treffen.

Aufgabe der vorliegenden Erfindung ist, ein Verfahren und ein System zur Identifikation von Überportionierung von Komponenten bei wenigstens teilweise konsumierten, gleichmäßig vorportionierten Essensangeboten zu schaffen, bei denen die aus dem Stand der Technik bekannten Nachteile nicht mehr oder nur noch in vermindertem Umfang auftreten.

Gelöst wird diese Aufgabe durch ein Verfahren und ein System gemäß unabhängigen Ansprüchen. Vorteilhafte Weiterbildungen sind Gegenstand der abhängigen Ansprüche. Demnach betrifft die Erfindung ein Verfahren zur Identifikation von Überportionierung von Komponenten bei wenigstens teilweise konsumierten, gleichmäßig vorportionierten Essensangeboten mit hinsichtlich der Komponenten und deren Menge bekannter Zusammensetzung, gekennzeichnet durch die Schritte:
a) Erfassung eines Bildes der Reste eines wenigstens teilweise konsumierten vorportionierten Essensangebots mithilfe einer Bilderfassungseinheit;
b) Automatisiertes Segmentieren des erfassten Bildes nach einzelnen Bestandteilen;
c) Automatisiertes Zuordnen der Bestandteile des Bildes zu den einzelnen Komponenten gemäß der Zusammensetzung des vorportionierten Essensangebots zur Identifikation von Resten der einzelnen Komponenten; und
d) Ermitteln der Konsumrate der einzelnen Komponenten des vorportionierten Essensangebots durch Abgleich der Menge der einzelnen Komponenten gemäß bekannter Zusammensetzung mit den der den einzelnen Komponenten zugeordneten Resten.

Weiterhin betrifft die Erfindung ein System zur Identifikation von Überportionierung von Komponenten bei wenigstens teilweise konsumierten, gleichmäßig vorportionierten Essensangeboten mit hinsichtlich der Komponenten und deren Menge bekannter Zusammensetzung, umfassend eine Bilderfassungseinheit und eine damit verbundene Auswertungseinheit, wobei das System zur Durchführung des erfindungsgemäßen Verfahrens ausgebildet ist.

Das erfindungsgemäße Verfahren bzw. System ermöglichen eine derart zügige Erfassung der Reste von teilweise konsumierten, gleichmäßig vorportionierten Essensangeboten, dass sich der dafür allein erforderliche Schritt des Erfassens eines Bildes der Reste eines wenigstens teilweise konsumierten vorportionierten Essensangebots einfach in bestehende operative Prozesse der Behandlung von konsumierten Essensportionen - wie bspw. dem Entfernen von Essensresten, Verpackungsmüll und Einmalservierten oder -besteck, sowie dem Reinigen von Tabletts, Geschirr, mehrfach verwendbarem Besteck, etc. - eingebunden werden kann; die nachfolgenden Schritte der Analyse des aufgenommenen Bildes können parallel zu diesen operativen Prozessen ablaufen und verzögern diesen nicht, zumindest nicht wesentlich. In der Folge ist es mit der vorliegenden Erfindung möglich, eine große Anzahl von wenigstens teilweise konsumierten, gleichmäßig vorportionierten Essensangeboten mit geringem Aufwand analysieren zu können, womit eine breite Datenbasis geschaffen werden kann, mit der eine Identifikation von Überportionierung zuverlässig möglich ist.

Dabei erfolgt die Identifikation von Überportionierung erfindungsgemäß auf Komponentenbasis - und nicht etwa global oder nach vollständigen Gerichten, wie im Stand der Technik. Die Ermittlung von Konsumraten einzelner Komponenten bedeutet in diesem Zusammenhang nämlich, dass nicht nur die Konsumrate des Essensangebots als Ganzes oder einzelner Gerichte davon, sondern verschiedener Bestandteile der Gerichte ermittelt werden. So kann erfindungsgemäße bspw. nicht nur die Konsumrate einer klassischen Hauptspeise als Ganzes, sondern getrennt nach Hauptzutat, Sättigungs-, Gemüse- und/oder Salatbeilage ermittelt werden. Es ist in einigen Fällen sogar möglich, die Konsumrate einzelner Zutaten eines gemischten Gerichtes zu ermitteln, bspw. die Zugaben bei Spezialsalaten, wie Fleischstreifen, Shrimp, Feta, Eier, Pilze etc. Hierfür ist lediglich erforderlich, dass sich die einzelnen Komponenten in dem aufgenommenen Bild optisch ausreichend deutlich voneinander unterscheiden, dass sie bei der Segmentierung des Bildes als getrennte Bestandteile erkannt und anschließend auch ausreichend eindeutig einer bestimmten Komponente zugeordnet werden können.

Es ergibt sich dann für die einzelnen Komponenten des vorportionierten Essensangebots, dessen Zusammensetzung bekannt ist, im Abgleich mit den durch die Zusammensetzung vorgegebenen Mengen für die jeweiligen Komponenten, jeweils eine gesonderte Konsumrate, die letztendlich angibt, zu welchen Anteilen welche Komponente des Essensangebots konsumiert wurde. Eine geringe Konsumrate einer Komponente kann auf eine Überportionierung dieser Komponente hindeuten.

Grundsätzlich kann es ausreichend sein, wenn als Konsumrate lediglich festgestellt wird, ob eine bestimmte Komponente vollständig konsumiert ist oder nicht. Vorzugsweise wird festgestellt, ob eine bestimmte Komponente vollständig, teilweise oder gar nicht konsumiert wurde. Weiter bevorzugt ist es, wenn die Konsumrate einer Komponente als Anteil der Ausgangsmenge dieser Komponente ermittelt wird. Hierzu kann bspw. anhand der Fläche, die eine Komponente auf einem erfassten Bild einnimmt Rückschlüsse auf die (verbliebene) Menge einer Komponente gezogen und daraus ein entsprechender Anteil an der Ausgangsmenge ermittelt werden.

Da ein erfindungsgemäß ermittelte Konsumraten für die einzelnen Komponenten eines Essensangebots auf Basis eines einzelnen teilweise konsumierten Essensangebots häufig keine Allgemeingültigkeit besitzen, ist es bevorzugt, die erfindungsgemäßen Verfahrensschritte für eine Vielzahl von wenigstens teilweise konsumierten, gleichmäßig vorportionierten Essensangeboten mit identischer Zusammensetzung durchgeführt wird, sodass die individuell ermittelten Konsumraten der einzelnen Komponenten des Essensangebots zu globalen Konsumraten der einzelnen Komponenten zusammengefasst werden können. Auf Basis dieser globalen Konsumraten können dann systematische Überportionierungen erkannt und die Zusammensetzung des Essensangebots anhand der globalen Konsumraten der einzelnen Komponenten angepasst werden. Auf diese Weise können praktisch systematisch auftretende Lebensmittelabfälle aufgrund von Überportionierung wirksam reduziert werden.

Für das automatisierte Segmentieren des erfassten Bildes kann auf aus der Bildverarbeitung bekannte Verfahren zurückgegriffen werden. Insbesondere kann hier auch eine künstliche Intelligenz, die bspw. durch ausreichend viele Trainingsdaten geeignet angelernt wurde, zum Einsatz kommen.

Auch das automatisierte Zuordnen der Bestandteile des Bildes zu den einzelnen Komponenten gemäß der Zusammensetzung des vorportionierten Essensangebots und/oder die Ermittlung der Konsumrate der einzelnen Komponenten des vorportionierten Essensangebots kann bevorzugt durch eine oder mehrere künstliche Intelligenz(en) erfolgen. Insbesondere kann eine künstliche Intelligenz dabei nach dem Prinzip des maschinellen Lernens aufgebaut und geeignet angelernt sein.

Das automatisierte Zuordnen der Bestandteile des Bildes zu den Komponenten des Essensangebots und/oder der Ermittlung der Konsumrate der einzelnen Komponenten umfasst vorzugsweise den Abgleich mit einem Referenzbild eines nicht konsumierten Essensangebots. Durch einen solchen Abgleich kann das Zuordnen aufgrund des optischen Eindrucks, den eine bestimmte Komponente auf einem erfassten Bild hat, erfolgen. Durch den Abgleich mit einem Referenzbild kann nicht nur regelmäßig die Zuverlässigkeit bei der Zuordnung von Resten zu einer bestimmten Komponente verbessert werden, sondern es kann auch die Ermittlung der Konsumrate zumindest einiger Komponenten vereinfacht werden. Unter der Annahme, dass die gemäß der vorgegebenen Zusammensetzung vorgesehene Menge einer bestimmten Komponente eines Essensangebots auf dem Referenzbild eine bestimmte Fläche einnimmt, kann durch Abgleich mit der Fläche, welche die Reste derselben Komponente auf einem erfassten Bild eines wenigstens teilweise konsumierten Essensangebots einnimmt, unmittelbar eine Konsumrate für diese Komponente ermittelt werden. Ein solcher Abgleich mag je nach Art der Komponente in seiner Genauigkeit variieren und für einzelne Komponenten sogar grundsätzlich nicht möglich sein, für eine Vielzahl von üblichen Komponenten eines Essensangebots, wie es bspw. für Verkehrsflugzeuge bekannt ist, liefert ein solcher Abgleich aber zuverlässige Informationen zur Konsumrate der Komponente. Erfolgt die Ermittlung von Konsumraten nicht unmittelbar auf Basis eines Referenzbildes, sondern wird das Referenzbild lediglich zur Zuordnung von Bestandteilen des Bildes zu den Komponenten des Essensangebots genutzt, kann das Referenzbild auch von einem teilweise konsumierten Essensangebot stammen oder das Referenzbild wird aus mehreren Bildern teilweise konsumierter Essensangebote zusammengesetzt, sodass vorzugsweise jede Komponente des Essensangebotes auf dem letztendlichen Referenzbild abgebildet ist.

Um die Konsumrate bestimmen zu können, ist es erforderlich, dass das Essensangebot, von dem ein Bild nach wenigstens teilweiser Konsumierung erfasst und erfindungsgemäß ausgewertet wird, bzw. dessen Zusammensetzung bekannt ist. Die entsprechenden Informationen können bei dem Verfahren manuell vorgegeben werden. Es ist aber bevorzugt, wenn anhand des erfassten Bildes das ursprüngliche vorportionierte Essensangebot ermittelt wird, zu dem dann die Zusammensetzung und/oder ein Referenzbild bspw. aus einer Datenbank abgerufen werden können. Diese Ermittlung des ursprünglichen vorportionierten Essensangebots kann vorzugsweise mithilfe einer künstlichen Intelligenz, bspw. basierend auf maschinellem Lernen, durchgeführt werden. Unabhängig davon kann die Ermittlung auf Basis der auf einem erfassten Bild vorhandenen Reste eines nur teilweise konsumierten Essensangebots erfolgen. Um bspw. aber eine Ermittlung des ursprünglichen Essensangebots auch nach vollständiger Konsumierung zu ermöglichen, ist es bevorzugt, für die fragliche Zuordnung eines erfassten Bildes zu einem bestimmten Essensangebot auf spezifische Merkmale nicht-essbarer Teile, die auch bei vollständig konsumiertem Essensangebot zurücklaufen und bildlich erfasst werden können, zu stützen. Bspw. können hierzu Form und/oder Farbgebung von Tabletts, Geschirr und/oder Besteck herangezogen werden. Es ist auch möglich, dass Tabletts, Geschirr oder sonstige nicht-essbare Teile mit einem maschinenlesbaren Code, wie bspw. QR-Code, oder einem RFID-Tag versehen sind, worüber sich das ursprüngliche Essensangebot eindeutig ermitteln lässt.

Insbesondere wenn die erfindungsgemäßen Verfahrensschritte zur Ermittlung globaler Konsumraten für eine Vielzahl von wenigstens teilweise konsumierten, gleichmäßig vorportionierten Essensangeboten mit identischer Zusammensetzung durchgeführt werden, ist es bevorzugt, wenn die für einzelne Essenangebote ermittelten Konsumraten mit Informationen über die Umstände, in denen das Essensangebot gemacht wurde, angereichert sind. Handelt es sich bspw. um Essensangebote an Bord von Verkehrsflugzeugen, kann die Flugstrecke, das Flugdatum, die Uhrzeit des Servierens der Essensangebote, sowie ggf. auch Informationen zu anderen, während des fraglichen Fluges servierten Essensangeboten zusammen mit den einzelnen Konsumraten abgelegt werden. Bei der Ermittlung globaler Konsumraten können diese Informationen dann berücksichtigt werden, um bspw. geografische und/oder zeitliche Tendenzen zu ermitteln. So mag sich für eine, sich bei einigen Interkontinental-Flugrouten als geeignet herausstellende Portionierung eines Essensangebots für eine oder mehrere andere Interkontinental-Flugrouten herausstellen, dass eine Überportionierung wenigstens einer Komponente des Essensangebots vorliegt. Ebenso kann bspw. festgestellt werden, dass eine für die Mittagszeit geeignete Portionierung eines bestimmten Essensangebots für dasselbe Essensangebot am Abend eine Überportionierung wenigstens einer Komponente davon vorliegt.

Zur Erläuterung des erfindungsgemäßen Systems wird auf die vorstehenden Ausführungen verwiesen.

Es ist bevorzugt, wenn das System einen Signalgeber umfasst, der nach einer erfolgten Bilderfassung durch die Bilderfassungseinheit ein Signal ausgibt. Insbesondere wenn die Bilderfassungseinheit des Systems manuell bedient wird, kann einem Bediener durch den Signalgeber angezeigt werden, wenn die Bilderfassung abgeschlossen ist. Der Signalgeber kann zur Ausgabe eines optischen und/oder akustischen Signals ausgebildet sein.

Die Erfindung wird nun anhand einer bevorzugten Ausführungsform unter Bezugnahme auf die beigefügten Zeichnungen beispielhaft beschrieben. Es zeigen:
- Figur 1:: eine schematische Darstellung eines Ausführungsbeispiels eines erfindungsgemäßen Systems;
- Figur 2a, b:: schematische Darstellungen eines vorportionierten Essensangebots in Ausgangszustand und im teilweise konsumierten Zustand; und
- Figur 3a-c:: schematische Darstellungen eines Teils der von der Auswerteeinheit des Systems gemäß Figur 1 durchgeführten Schritte.

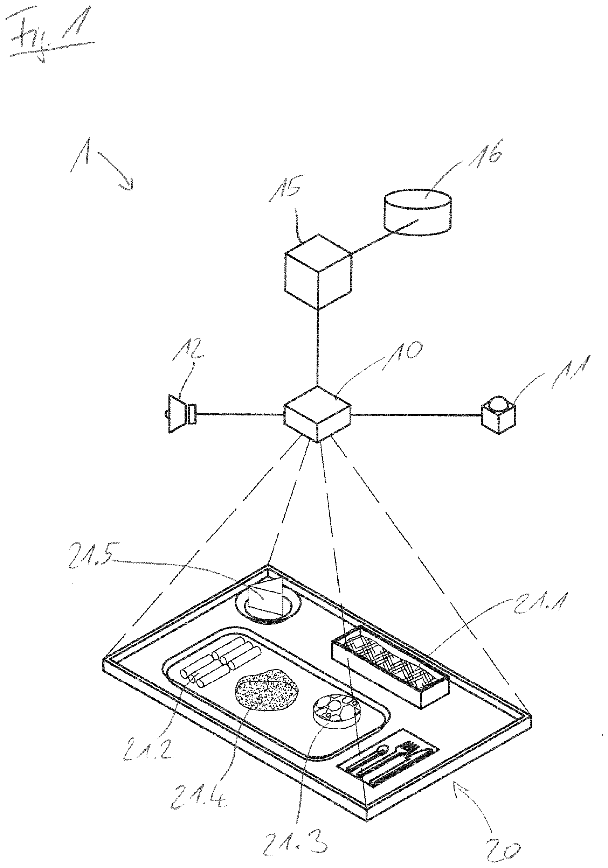

In Figur 1 ist schematisch ein erfindungsgemäßes System 1 zur Identifikation von Überportionierung von Komponenten 21.1-21.5 bei wenigstens teilweise konsumierten, gleichmäßig vorportionierten Essensangeboten 20 dargestellt.

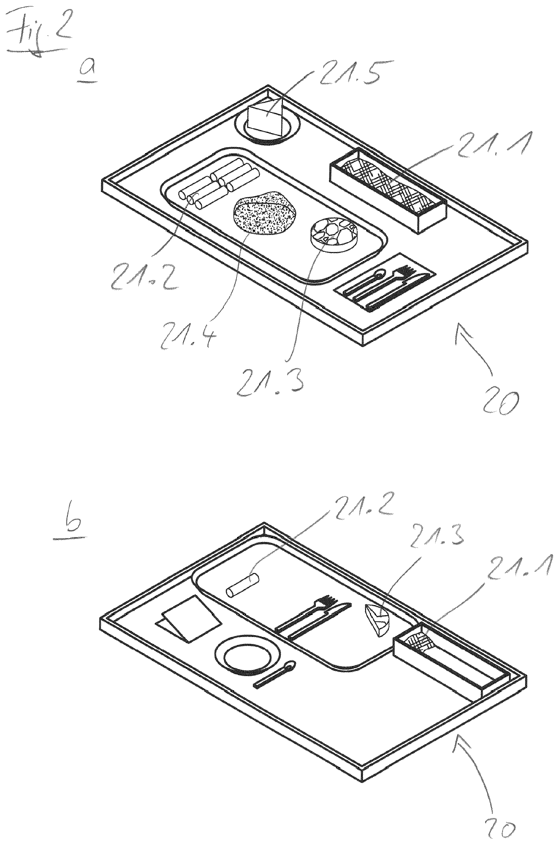

Ein solches gleichmäßig vorportionierten Essensangebot 20 ist exemplarisch in Figur 2 dargestellt, wobei Figur 2a das vorportionierte Essensangebot 20 im Ausgangszustand zeigt, während in Figur 2b das Essensangebot 20 gemäß Figur 2a teilweise konsumiert wurde. Entsprechende Essensangebote 20 sind bspw. als Passagierverpflegung an Bord von Verkehrsflugzeugen bekannt, und umfassen verschiedene Essens-Komponenten 21.1-21.5. Im dargestellten Beispiel sind dies ein Salat 21.1, ein Hauptgericht mit einer Hauptzutat 21.2, einer Sättigungsbeilage 21.3 und einer Gemüsebeilage 21.4, sowie ein Nachtisch 21.5, die jeweils auf passendem Geschirr gemeinsam auf einem Tablett zum Verzehr angeboten werden (können).

Im Ausgangszustand sind entsprechende Essensangebote 20 grundsätzlich gleichmäßig vorportioniert, um so potenzielle Konflikte bspw. zwischen Passagieren vorzubeugen, aber auch um bspw. Mindestanforderungen an Nährwerte eines Essenangebots 20 zuverlässig zu erfüllen. Dazu sind die einzelnen Komponenten 21.1-21.5 eines Essensangebots 20 nicht nur hinsichtlich ihrer Art, sondern auch hinsichtlich ihrer jeweiligen Menge festgelegt. In anderen Worten ist die Zusammensetzung gleicher Essensangebote 20 grundsätzlich identisch.

Bei gleichmäßig vorportionierten Essensangeboten 20, die regelmäßig auf Tabletts o. Ä angeboten und/oder serviert werden, ist es üblich, dass die Essenangebote 20 nach wenigstens teilweisem Konsum wieder zurücklaufen, d. h. die Tabletts mit dem verwendeten Geschirr sowie darauf ggf. befindliche Reste 22.1-22.3 der Komponenten 21.1-21.5 werden gemeinsam, wie exemplarisch in Figur 2b dargestellt, zurückgegeben. Während das Tablett und das Geschirr gereinigt und wiederverwendet werden können, müssen die Reste 22.1-22.3 der Komponenten 21.1-21.3 (die Komponenten 21.4, 21.5 wurde im dargestellten Beispiel vollständig konsumiert) entsorgt werden. Zielsetzung ist es, Reste, die möglicherweise aufgrund von Überportionierung einzelner Komponenten 21.1-21.5 entstehen, als solche zu identifizieren, um daraufhin ggf. die Zusammensetzung des Essensangebots 20 anzupassen.

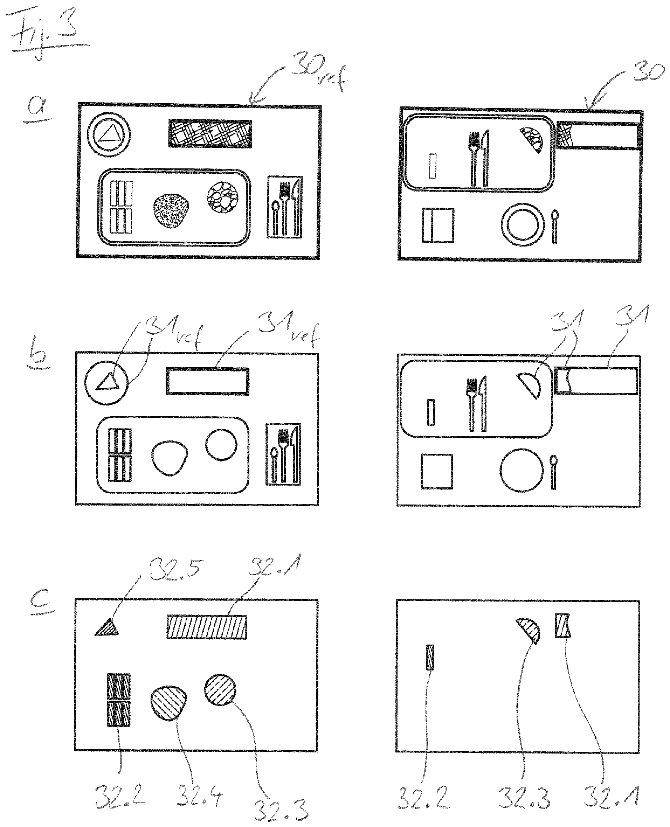

Wie in Figur 1 dargestellt, umfasst System 1 hierfür eine Bilderfassungseinheit 10 mit der grundsätzlich Bilder 30, 30_{ref} (vgl. Figur 3) von Essensangeboten 20 (unabhängig ob frisch portioniert oder bereits wenigstens teilweise konsumiert) aufgenommen werden können. Die Bilderfassungseinheit 10 ist mit einem Auslöser 11 und einem akustischen Signalgeber 12 verbunden: Über den Auslöser 11 wird eine Bilderfassung durch die Bilderfassungseinheit 10 gestartet, nämlich insbesondere dann, wenn ein zu erfassendes Essensangebot 20 im Aufnahmebereich der Bilderfassungseinheit 10 angeordnet ist; nach Abschluss einer entsprechenden Bilderfassung wird über den Signalgeber 12 ein Ton ausgegeben, der anzeigt, dass das nunmehr erfasste Essensangebot 20 aus dem Aufnahmebereich der Bilderfassungseinheit 10 entfernt werden kann. Anstelle eines manuellen Auslösers 11, wie er in Figur 1 dargestellt ist, können auch automatische Auslöser 11 in Betracht kommen. Bspw. wenn wenigstens teilweise konsumierte Essensangebote 20 in einem bereits etablierten Prozess über Endlos-Transportbänder transportiert werden, kann die Bilderfassungseinheit 10 so auf ein Transportband ausgerichtet sein, um darauf transportierte Essensangebote 20 zu erfassen. In diesem Fall kann der Auslöser 11 bspw. als Lichtschranke ausgebildet sein, die immer dann auslöst, wenn sich ein auf dem Transportband transportiertes Essensangebot 20 im Aufnahmebereich der Bilderfassungseinheit 10 befindet; bei einer solchen beispielhaften Ausgestaltung kann der Signalgeber 12 ggf. auch entfallen. Es können auch beliebige andere Sensoren als Auslöser 11 verwendet werden. Insbesondere ist möglich, dass die Bilderfassungseinheit 10 so ausgestaltet ist, dass sie anhand eines durchgehend aufgenommenen Videobildes erkennt, sobald sich ein Essensangebot im Bildbereich der Bilderfassungseinheit 10 befindet und daraufhin ein Bild 30, 30_{ref} zur weiteren Verarbeitung erfasst.

Die von der Bilderfassungseinheit 10 erfassten Bilder 30, 30_{ref} von Essensangeboten 20 werden an eine Datenauswerteeinheit 15 übermittelt und von dieser, wie nachfolgend noch näher erläutert, ausgewertet. Die Datenauswerteeinheit 15 ist dabei mit einer Datenbank 16 verbunden, in der für die Auswertung erforderliche und/oder hilfreiche Daten abgelegt sind. Die Datenauswerteeinheit 15 kann getrennt von der Bilderfassungseinheit 10 ausgebildet sein. Es ist aber auch möglich, dass die Datenauswerteeinheit 15 und/oder Datenbank 16 oder zumindest Teile davon in die Bilderfassungseinheit 10 integriert sind. Bei einer solchen Bilderfassungseinheit 10 kann es sich bspw. um ein Smartphone oder ein Tablet handeln.

In Figur 3a sind exemplarisch von der Bilderfassungseinheit 10 aufgenommene Bilder 30, 30_{ref} von dem Essensangebot gemäß Figur 2 dargestellt, wobei in Figur 3 auf der linken Seite grundsätzlich das vorportionierte Essensangebot 20 im Ausgangszustand gemäß Figur 2a im Sinne eines Referenzbildes 30_{ref} zeigt, während das teilweise konsumierte Essensangebot 20 gemäß Figur 2b grundsätzlich auf der rechten Seite dargestellt ist.

Die Bilder 30, 30_{ref} werden nach ihrer Erfassung zunächst segmentiert, d. h. mithilfe von bekannten Bilderkennungsalgorithmen, die auch auf maschinellem Lernen basieren können, wird das Bild in jeweils zusammengehörige Bereiche 31, 31_{ref} unterteilt, wie dies in Figur 3b dargestellt ist.

Anschließend - oder auch unmittelbar zusammen mit der Segmentierung des erfassten Bildes 30, 30_{ref} - werden die Bereiche 31, 31_{ref} den Komponenten 21.1-21.5 des Essensangebotes 20, sofern vorhanden zugeordnet. Auch diese Zuordnung kann mithilfe bekannter Bilderkennungsalgorithmen, ggf. unter Zuhilfenahme künstlicher Intelligenz, die auf maschinellem Lernen basieren kann, erfolgen. Wie in Figur 3c gezeigt, lassen sich bei dem Essensangebot 20 im Ausgangszustand - da basierend auf dem entsprechenden Referenzbild 30_{ref} - sämtliche Komponenten 21.1-21.5 finden (vgl. zugehörige Bereiche 32.1_{ref}-32.5_{ref}), während sich bei dem teilweise konsumierten Essensangebot 20 nur noch Bereiche 32.1-32.3 für diejenigen Komponenten 21.1-21.3 identifizieren lassen, die nur teilweise verzehrt wurden.

In diesem Schritt können auch noch weitere Informationen insbesondere aus dem Bild 30 bzw. den Bereichen 31 ermittelt werden: Wird bspw. nicht vorgegeben, um was für ein Essensangebot 20 es sich auf dem erfassten Bild 30 im Ausgangszustand gehandelt hat, kann aufgrund von spezifischen Merkmalen nicht-essbarer Teile auf dem Bild 30, bspw. der Formgebung und Farbe des Geschirrs, das Essensangebot 20 erkannt werden.

Die Informationen betreffend das Essensangebot 20 im Ausgangszustand, wie sie auf der linken in Figur 3c dargestellt sind, sind in der Datenbank 16 als Referenzbild 30_{ref} bzw. als Zusammensetzung des Essensangebots 20 hinterlegt, während die Informationen auf der rechten Seite der Figur 3c für jedes untersuchte wenigstens teilweise konsumiertes Essensangebot 20 in der Regel nur temporär zwischengespeichert werden müssen. Die in der Datenbank 16 abgelegten Informationen betreffend das Essensangebot 20 im Ausgangszustand stellen - selbst wenn sie dort lediglich als Referenzbild 30_{ref} abgelegt sind - letztendlich die Zusammensetzung des Essensangebots 20 im Hinblick auf die Komponenten 21.1-21.5 und auch - in Form der jeweils eingenommenen Fläche - einen Indikator zu deren jeweilige Menge dar, sodass bereits aufgrund des Referenzbildes 30_{ref} bzw. dessen Auswertung die Zusammensetzung des Essensangebots 20 im Ausgangszustand aufgrund der in der Datenbank 16 abgelegten Informationen als bekannt angesehen werden kann.

Anhand der zugeordneten Bereiche 32.1-32.5 bzw. 32.1-32.3 gemäß Figur 3c können die Konsumraten für die einzelnen Komponenten 21.1-21.5 des Essensangebots 20 ermittelt werden. Grundsätzlich kann auch hier auf eine künstliche Intelligenz, die bspw. durch maschinelles Lernen dazu ausgebildet ist, zurückgegriffen werden. In einer vereinfachten und vorliegend zur Veranschaulichung herangezogenen Auswertung werden lediglich die Flächeninhalte der Bereiche 32.1-32.5 bzw. 32.1-32.3 miteinander ins Verhältnis gesetzt, um die Konsumraten für die einzelnen Komponenten 21.1-21.5 zu ermitteln:

| Komponente | Konsumrate |
|---|---|
| 21.1 | 85% |
| 21.2 | 83% |
| 21.3 | 70% |
| 21.4 | 100% |
| 21.5 | 100% |

Die so ermittelten Konsumraten werden in der Datenbank 16 abgelegt, wobei neben den eigentlichen Konsumraten auch noch Zusatzinformationen bspw. zum Zeitpunkt, Ort und anderen Umständen, in denen das Essensangebot 20 serviert wurde, abgelegt werden.

Wird die beschriebene Ermittlung der Konsumraten für eine Vielzahl von wenigstens teilweise konsumierten, gleichmäßig vorportionierten Essensangeboten 20 durchgeführt, lassen sich mögliche Überportionierungen erkennen, die insbesondere auch anhand von Zusatzinformationen gegliedert sein können. So ist es bspw. denkbar, dass durch entsprechende Analyse festgestellt wird, dass, während die Portionierung sämtlicher Komponenten 21.1-21.5 des Essensangebots für einige Interkontinental-Flugrouten zutreffend sein mag und sich die anfallenden Essensreste nicht auf eine systematische Überportionierung zurückführen lassen, die Komponenten 21.3 auf anderen Interkontinental-Flugrouten möglicherweise überportioniert erscheint.

In der Folge kann die Zusammensetzung des Essensangebots 20 auf eben diesen Flugrouten zur Abfallverminderung im Hinblick auf die fragliche Komponente 21.3 angepasst werden, um eine systematische Überportionierung zu vermeiden.

## Patentansprüche

1. Verfahren zur Identifikation von Überportionierung von Komponenten (21.1-21.5) bei wenigstens teilweise konsumierten, gleichmäßig vorportionierten Essensangeboten (20) mit hinsichtlich der Komponenten (21.1-21.5) und deren Menge bekannter Zusammensetzung, **gekennzeichnet durch** die Schritte:
a) Erfassung eines Bildes (30) der Reste eines wenigstens teilweise konsumierten vorportionierten Essensangebots (20) mithilfe einer Bilderfassungseinheit (10);
b) Automatisiertes Segmentieren des erfassten Bildes (30) nach einzelnen Bestandteilen (31);
c) Automatisiertes Zuordnen der Bestandteile (31) des Bildes (30) zu den einzelnen Komponenten (21.1-21.5) gemäß der Zusammensetzung des vorportionierten Essensangebots (20) zur Identifikation von Resten der einzelnen Komponenten (21.1-21.5); und
d) Ermitteln der Konsumrate der einzelnen Komponenten (21.1-21.5) des vorportionierten Essensangebots (20) durch Abgleich der Menge der einzelnen Komponenten (21.1-21.5) gemäß bekannter Zusammensetzung mit den den einzelnen Komponenten (21.1-21.5) zugeordneten Resten.

2. Verfahren nach Anspruch 1,
**dadurch gekennzeichnet, dass**
die Schritte a) bis d) für eine Vielzahl von wenigstens teilweise konsumierten, gleichmäßig vorportionierten Essensangeboten (20) mit identischer Zusammensetzung durchgeführt wird, die ermittelte Konsumraten der einzelnen Komponenten des Essensangebots (20) zu globalen Konsumraten der einzelnen Komponenten (21.1.-21.5) zusammengefasst werden, und die Zusammensetzung des Essensangebots (20) zur Abfallverminderung anhand der globalen Konsumraten der einzelnen Komponenten (21.1.-21.5) angepasst wird.

3. Verfahren nach einem der vorhergehenden Ansprüche,
**dadurch gekennzeichnet, dass**
das automatisierte Zuordnen der Bestandteile (31) des Bildes (20) zu den Komponenten (21.1-21.5) des Essensangebots (20) und/oder der Ermittlung der Konsumrate der einzelnen Komponenten (21.1-21.5) den Abgleich mit einem Referenzbild (30_{ref}) und/oder daraus gewonnenen Informationen eines nicht konsumierten Essensangebots (20) umfasst.

4. Verfahren nach einem der vorhergehenden Ansprüche,
**dadurch gekennzeichnet, dass**
anhand des erfassten Bildes (30) das ursprüngliche vorportionierte Essensangebot (20) ermittelt wird.

5. Verfahren nach einem der vorhergehenden Ansprüche,
**dadurch gekennzeichnet, dass**
die für einzelne Essenangebote (20) ermittelten Konsumraten mit Informationen über die Umstände, in denen das Essensangebot (20) gemacht wurde, angereichert sind.

6. Verfahren nach einem der vorhergehenden Ansprüche,
**dadurch gekennzeichnet, dass**
das automatisierte Segmentieren des erfassten Bildes (30) nach einzelnen Bestandteilen (31), das automatisiertes Zuordnen der Bestandteile (31) des Bildes (30) zu den einzelnen Komponenten (21.1-21.5) gemäß der Zusammensetzung des vorportionierten Essensangebots (20) und/oder das Ermitteln der Konsumrate der einzelnen Komponenten (21.1-21.5) des vorportionierten Essensangebots (20) mithilfe einer oder mehrerer künstlicher Intelligenzen, insbesondere basierend auf maschinellem Lernen, durchgeführt wird.

7. System (1) zur Identifikation von Überportionierung von Komponenten (21.1-21.5) bei wenigstens teilweise konsumierten, gleichmäßig vorportionierten Essensangeboten (20) mit hinsichtlich der Komponenten (21.1-21.5) und deren Menge bekannter Zusammensetzung, umfassend eine Bilderfassungseinheit (10) und eine damit verbundene Auswertungseinheit (11), wobei das System (1) zur Durchführung des Verfahrens gemäß einem der vorhergehenden Ansprüche ausgebildet ist.

8. System (1) nach Anspruch 7,
**dadurch gekennzeichnet, dass**
das System (1) einen Signalgeber (12) umfasst, der nach einer erfolgten Bilderfassung durch die Bilderfassungseinheit (10) ein Signal ausgibt.
